Europäisches Patentamt

European Patent Office

Office européen des brevets

(19)

(11) Numéro de publication : **0 425 521 B1**

# (12) FASCICULE DE BREVET EUROPEEN

(45) Date de publication du fascicule du brevet :
**19.08.92 Bulletin 92/34**

(51) Int. Cl.$^5$ : **E21B 33/138, E21B 43/25**

(21) Numéro de dépôt : **89907174.0**

(22) Date de dépôt : **02.06.89**

(86) Numéro de dépôt international :
**PCT/FR89/00274**

(87) Numéro de publication internationale :
**WO 89/12157 14.12.89 Gazette 89/29**

---

(54) **Procédé de mise en place d'un gel dans un puit.**

---

(30) Priorité : **03.06.88 FR 8807396**

(43) Date de publication de la demande :
**08.05.91 Bulletin 91/19**

(45) Mention de la délivrance du brevet :
**19.08.92 Bulletin 92/34**

(84) Etats contractants désignés :
**DE GB IT NL**

(56) Documents cités :
**US-A- 2 034 347**
**US-A- 3 227 212**
**US-A- 3 740 360**
**US-A- 3 881 552**
**US-A- 3 964 923**

(73) Titulaire : **SOCIETE NATIONALE ELF
AQUITAINE (PRODUCTION)
Tour Elf
F-92078 Paris la Défense Cédex 45 (FR)**

(72) Inventeur : **ALQUIE, Bernard
12, avenue du 18ème-R.I.
F-64000 Pau (FR)**
Inventeur : **KOHLER, Norbert
14, rue des Chenets
F-78100 Saint-Germain-en-Lay (FR)**
Inventeur : **WILD, Marcel
7, rue Louise-Labé
F-78540 Vernouillet (FR)**

(74) Mandataire : **Andreeff, François et al
INSTITUT FRANCAIS DU PETROLE 4, avenue
de Bois-Préau
F-92502 Rueil-Malmaison (FR)**

## Description

La présente invention est relative à un procédé de mise en place d'un gel dans un puits foré dans le sol, en vue de l'isolation temporaire et sélective de zones perméables du sous-sol traversées par le puits. Plus particulièrement, l'invention s'applique à des puits de pétrole.

Il est souvent souhaité de bloquer ou d'isoler temporairement une formation perméable d'un puits, de sorte que d'autres zones puissent être traitées ou stimulées, par exemple par fracturation ou acidification ou encore, lors d'opérations de reprise ou de modification de l'équipement des puits. De même, en cours de forage, on procède couramment à l'isolation des zones perméables, causant des pertes de fluide de forage trop sensibles.

De multiples méthodes et compositions ont été proposées jusqu'à présent et sont utilisées pour isoler provisoirement une formation productrice. Par exemple des agents de colmatage fibreux, floconneux ou granulaires, du ciment et des gels visqueux ont été employés tour à tour comme agents de colmatage. L'utilisation plus récente de gels aqueux, tels que ceux qui contiennent des polysaccharides réticulés, dispersés à l'état granulaire dans de l'eau, comme décrit dans le brevet US 3 227 212, a constitué une grande amélioration par rapport aux méthodes antérieures. Toutefois, certaines difficultés de mise en oeuvre de ces gels ont été observées, notamment l'instabilité des formulations, par suite de brusques changements de valeurs du pH et de la température, du manque d'homogénéité des dispersions aqueuses, lors de leur mise en place dans le puits et, surtout, de la difficulté de contrôler le temps de prise du gel pour qu'il prenne en masse juste en regard de la formation à isoler.

Des améliorations ont été recherchées par l'emploi de polymères hydrogélifiables, tels que polyacrylamide, éthers de cellulose ou polysaccharides au sein d'un mono- ou polyalcool ; la réticulation du polymère au contact de l'eau était obtenue par l'addition d'un système d'oxydoréduction, notamment bichromate de sodium/sulfite de sodium. Tel est l'objet des brevets US 3 881 552 et 3 964 923 ; les compositions proposées souffrent de l'instabilité des oxydants en milieu organique et des difficultés de réglage de la viscosité du fluide utilisé.

Il s'en suit que, malgré les nombreux efforts, développés dans ce domaine, il existe toujours le besoin d'un procédé satisfaisant pour la production d'un gel imperméable à l'eau, dans un puits.

La présente invention apporte une solution économique et commode de ce problème. Elle permet le contrôle de la mise en place du bouchon de gel à l'endroit souhaité et assuré. Contrairement aux compositions et aux mises en place connues antérieurement, il n'est pas nécessaire d'effectuer des mesures préalables au laboratoire concernant le temps de prise du gel en fonction de la température. L'hydratation du polymère sous forme solide est retardée aussi longtemps que le fluide non aqueux qui le supporte ne rencontre pas d'eau en quantité suffisante pour le gélifier.

Un autre avantage de la technique de l'invention réside dans le fait que le risque de filtration des constituants du gel à l'intérieur de la formation et le risque d'endommagement irréversible de l'injectivité ou de la productivité de la formation sont réduits. Cela est particulièrement important lorsqu'il s'agit d'isoler une zone fissurée ou fracturée où la technique de prise rapide du gel, selon l'invention, offre une solution qui n'est que difficilement obtenue avec des techniques conventionnelles.

En outre, avec la technique de l'invention il est possible, si on le désire, d'augmenter considérablement la concentration en polymère solide dans le gel et donc la résistance mécanique de ce dernier sans des difficultés de pompage, comme c'est le cas avec des fluides à base d'eau.

La composition utilisée dans le procédé suivant l'invention, constituée par une suspension ou solution d'un polymère hydrophile gélifiable dans un liquide organique au moins partiellement miscible à l'eau, est caractérisée en ce qu'elle contient un borate de métal alcalin ou un sel complexe d'un cation métallique polyvalent en suspension, en tant qu'agent de pontage.

Contrairement à ce qui se passe dans les procédés antérieurs, utilisant une composition aqueuse, le borate alcalin n'est pas dissous, ou reste très peu dissous, dans le milieu alcoolique de la composition. Il était inattendu que ces sels agissent bien dès que la composition entre en contact avec l'eau. En effet, comme on a vu plus haut, dans la technique antérieure avec liquide non aqueux, on employait des systèmes oxydo-réduction et non pas des borates.

Les agents de pontage dans les compositions utilisée dans le procédé suivant l'invention peuvent être des métaborates ou des tétraborates de Na ou K, anhydres ou hydratés, soit $NaBO_2$, $NaBO_2.4H_2O$, $Na_2B_4O_7$, $Na_2B_4O_7.5H_2O$, $Na_2B_4O_7.10H_2O$; ce dernier, le borax, est industriellement très pratique et c'est par rapport à lui que sont indiquées les proportions pondérales préférées. Ces proportions sont de 0,01 à 20%; et surtout 0,05 à 5%, sur le poids de polysaccharide hydrophile de la composition.

Il est bon d'épaissir le mono- ou/et polyalcool utilisé, par l'adjonction d'un agent viscosifiant, afin d'éviter l'éventuelle sédimentation du polymère solide.

Ainsi, une composition utilisée dans le procédé selon l'invention comprend un polysaccharide hydrophile, en suspension ou solution dans un liquide organique pratiquement anhydre, mais au moins partiellement miscible à l'eau. Par hydrophile on entend un polymère soluble dans l'eau aux concentrations susceptibles de conduire à un gel. Le liquide organique est sensiblement anhydre, c'est-à-dire que, lorsqu'il renferme de l'eau, la quantité de cette dernière doit être suffisamment faible, par exemple moins de 10% en poids, pour éviter une viscosification excessive avant mise en place. Divers additifs favorisant la formation, la stabilité et, à terme, la rupture du gel sont en général ajoutés à cette suspension, notamment un agent de contrôle du pH et un agent de rupture du gel.

Le liquide organique devant être au moins partiellement miscible à l'eau, cette miscibilité est, par exemple d'au moins 1 partie par 100 parties d'eau, de préférence au moins 10 parties par 100 parties d'eau. Une miscibilité en toutes proportions est toutefois préférée.

Parmi les liquides organiques utilisés comme fluides de support des polymères constituant gel et au moins partiellement miscibles à l'eau, on peut signaler les mono-alcools aliphatiques inférieurs, par exemple de 1 à 8 atomes de carbone, plus particulièrement les alcools méthylique, éthylique, isopropylique, isobutylique, tertiobutylique, les di-alcools aliphatiques, par exemple de 2 à 10 atomes de carbone, plus particulièrement l'éthylène glycol, le propylène glycol, le diéthylène glycol, les trialcools aliphatiques par exemple la glycérine, divers éthers aliphatiques en $C_1$ à $C_4$ de l'éthylène glycol, du diéthylène glycol et du triéthylène glycol.

Parmi les polysaccharides hydrophiles, mis en suspension sous forme de poudre, dans ces fluides organiques, qui constituent la composante de base du gel final, on peut mentionner les polysaccharides d'origine naturelle, tels que les gommes de galactomannane comme par exemple la gomme guar et ses dérivés de substitution, l'hydroxypropylguar, le carboxyméthylguar, les gommes tara, cassia, caroube et leurs dérivés de substitution, les polysaccharides de synthèse tels que la gomme xanthane et le scléroglucane, ainsi que les dérivés cellulosiques tels que l'hydroxy-éthyl-cellulose, la carboxyméthylcellulose, la carboxyméthyl-hydroxy-éthylcellulose, etc. On utilise de préférence entre 5 et 40 parties en poids de polymère pour respectivement 95 à 60 parties en poids de liquide organique.

On peut se servir d'agents épaississants du fluide porteur, en vue d'éviter la sédimentation du polymère en poudre ; des additifs spécifiques à chaque type de fluide sont connus de l'homme de métier. Pour les alcools, qui constituent les fluides organiques préférentiels de l'invention, on emploie de préférence des dérivés hydroxypropylés ou carboxyméthylés de la gomme guar possédant un degré de substitution élevé, ce qui leur confère une solubilité au moins partielle dans ces fluides. Ainsi peut-on utiliser, en mélange avec ces alcools, 5 à 40 parties en poids d'hydroxy-propylguar de degré de substitution en groupements hydroxy-propylés inférieur à 0,5, par exemple de 0,2 à 0,4, et 1 à 10 parties en poids d'hydroxypropylguar de degré de substitution en groupements hydroxypropylés supérieur à 0,5, par exemple de 0,5 à 0,7, ce dernier étant utilisé en tant qu'épaississant de l'alcool. Une autre méthode d'épaississement de l'alcool consiste à ajouter 1 à 10 parties en poids d'eau concomitamment à l'addition d'hydroxypropylguar, ce qui entraîne une solubilisation partielle de ce dernier et empêche sa sédimentation. La quantité exacte d'agent épaississant dépend des conditions climatiques et de la durée de stockage de la suspension, de la température de prise du gel et de la nature des autres additifs présents dans la composition.

Des agents de contrôle du pH sont également ajoutés. Ils permettent de retarder l'hydrolyse du polymère et d'augmenter la stabilité du gel dans le temps. Des valeurs de pH supérieurs à 7,5 et de préférence compris entre 8 et 13 sont obtenues après le mélange de la composition avec l'eau, par addition d'hydroxydes, carbonates, bicarbonates ou phosphates de métaux alcalins et/ou alcalino-terreux à la composition.

Des agents de rupture du gel, tels que par exemple des enzymes, des persulfates, des peroxydes sont en général également ajoutés. Ils permettent d'assurer la destruction du gel après son emploi. Leur concentration et domaine d'emploi dépendent de la température de fond du puits.

Le procédé de mise en place du gel, dans la zone du puits à isoler, consiste à faire parvenir dans cette zone, par deux passages distincts, d'une part la composition décrite précedemment et, d'autre part, un fluide aqueux, notamment de l'eau. Les deux passages, sans communication l'un avec l'autre, excepté à leur débouché, peuvent être respectivement l'intérieur et l'extérieur (espace annulaire) d'un corps tubulaire, par exemple tube de production ou tige de forage, mis en place dans le puits (voir schéma). Au débouché des deux passages distincts, la composition s'hydrate en formant rapidement un gel consistant.

Ainsi, par exemple, le fluide sensiblement anhydre, contenant les principaux constituants du gel, est injecté par la tubulure, éventuellement précédée et suivie d'un fluide tampon permettant d'éviter une hydratation prématurée du polymère de base au contact de l'eau éventuellement contenue dans la tubulure. D'autre part, et à un débit adapté à la formation du gel désiré, on injecte de l'eau par l'espace annulaire, de telle sorte qu'à aucun moment, lors de leur progression dans le puits, les deux fluides ne viennent au contact l'un de l'autre. Au bas du corps tubulaire, les deux fluides, le fluide non aqueux injecté par le corps tubulaire, et l'eau injectée par l'espace annulaire, arrivent au contact l'un de l'autre et le polymère de base, sous forme solide, s'hydrate tout d'abord au contact de l'eau, puis se gélifie au contact de l'agent de réticulation transporté également par

3



EP 0 425 521 B1

le fluide non aqueux.

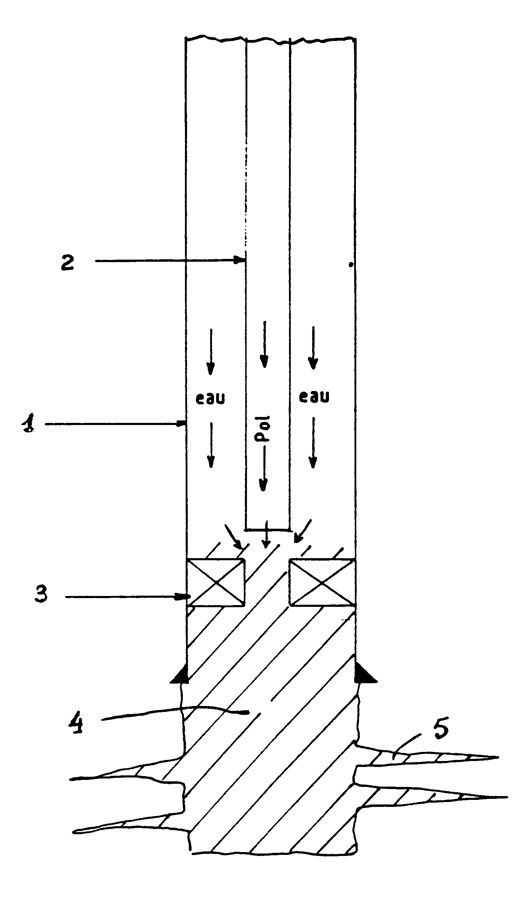

Le dessin annexé illustre schématiquement les opérations suivant l'invention.

Le repère 1 désigne la paroi du puits, tandis que 2 est un corps tubulaire, situé concentriquement dans ce puits. En 3 on a représenté un joint placé à l'extrémité supérieure de la zone où il s'agit de former le gel protecteur suivant l'invention. Le gel est désigné par le repère 4, dans la zone hachurée du dessin.

Comme expliqué plus haut, la dispersion de polymère, appelée "Pol" sur le dessin, est introduite par le corps tubulure 2, alors que l'eau arrive parallèlement, par l'espace annulaire compris entre le corps tubulaire 2 et la paroi 1 du puits. Le mélange du polymère avec l'eau se produit à la sortie du tube 2, comme illustré par trois flèches convergentes, pour former le fil dans la zone 4.

Des dérivations 5, montrées de part et d'autre de la zone 4, illustrent la manière à laquelle le gel 4 colmate les fuites du puits, en pénétrant dans les fissures du sol environnant.

Les gels aqueux, que l'on forme ainsi dans des puits, peuvent avoir une concentration en polymère hydrophile de, par exemple, 10 à 250 kg par $m^3$ d'eau, de préférence 20 à 150 kg/$m^3$ d'eau, mais qui dépend de la nature du polymère hydrophile et de l'effet désiré.

La quantité et le débit d'eau à faire parvenir, par exemple par l'espace annulaire, à la zone de formation du gel sont donc calculées en proportion de la quantité de polymère hydrosoluble en suspension ou solution dans le liquide porteur et de la concentration désirée du gel à obtenir.

La technique de mise en place du gel selon l'invention permet également d'augmenter fortement la concentration en catalyseur de gélification, par example de borax et, partant, la stabilité du gel, sans retarder indéfiniment la prise en masse du gel, ce qui constitue des faiblesses des fluides de l'art connu.Il en est de même en ce qui concerne l'utilisation de grandes quantités d'agents basiques, nécessaires à retarder l'hydratation du polymère en poudre dans les fluides connus et qui, par voie de conséquence, entraîne des retards considérables à la prise en masse de ce type de gels et qui n'est plus nécessaire dans l'invention. Toutefois, et particulièrement pour les applications à haute température, il peut s'avérer utile d'incorporer au gel de grandes quantités de catalyseur de gélification et/ou d'agent basique pour augmenter la stabilité dans le temps de ce gel. Dans ce cas, une des techniques de mise en place préférentielle du gel, selon l'invention, consiste à envoyer par le corps tubulaire et à faire réagir avec l'eau, en regard de la zone à isoler, deux bouchons successifs de polymère en suspension dans le fluide organique. Le premier bouchon, à prise rapide, ne contient que peu ou pas du tout de catalyseur et/ou d'agent basique, alors que le deuxième bouchon,à prise plus lente, contient les quantités souhaitées de ca talyseur et/ou d'agent basique.

D'autres avantages des compositions et de leurs mises en place, conformément à l'invention, ressortent des exemples non limitatifs qui suivent.

EXEMPLE 1

Temps de prise

On détermine les temps de prise à 90°C de cinq compositions suivantes.

(1) Suspension selon l'invention contenant 140 g/l d'hydoxy propylguar (HPG), 1 g/l de borax et 2 g/l de carbonate de sodium dans le propylène glycol que l'on disperse dans un un volume égal d'eau, de façon à former un gel contenant 70 g/l de HPG, 0,5 g/l de borax et 1 g/l de carbonate de sodium.

(2) Suspension selon l'invention contenant 140 g/l d'hydroxy-propylguar, 10 g/l de borax et 2 g/l de carbonate de sodium dans le propylène glycol, que l'on disperse dans un volume égal d'eau pour obtenir un gel contenant 70 g/l de HPG, 5 g/l de borax et 1 g/l de carbonate de sodium

(3) Suspension selon l'art antérieur,dans l'eau, de 70 g/l d'hydroxy-propylguar avec 0,5 g/l de borax, 1 g/l de carbonate de sodium (pH final 9,3).

(4) Suspension selon l'art antérieur, dans l'eau, de 70 g/l d'hydroxy-propylguar avec 1 g/l de carbonate de sodium, le pH final est amené à 12,1 avec de la soude. Cette composition ne contient pas de borax.

(5) Suspension selon l'art antérieur,dans l'eau, de 70 g/l d'hydroxy-propylguar. Cette composition ne contient ni borax ni agent basique et son pH final est de 8,3. La détermination est effectuée pour chacune des compositions sur un échantillon de 500 $cm^3$, qui est chauffé dans un bain d'huile à la température de 90°C. Le temps de prise est le temps que met le gel à atteindre une consistance telle qu'il ne s'écoule plus lorsqu'on retourne le récipient.

Le tableau suivant rassemble les résultats obtenus pour les différentes compositions étudiées.

TABLEAU 1.  Mesure du temps de prise à 90°C

| Composition | 1 | 2 | 3 | 4 | 5 |
|---|---|---|---|---|---|
| Temps de prise | 1mn45 | 5mn15 | 60 mn | 35 mn | 40 mn |

On constate que les compositions 1 et 2, correspondant à l'objet de l'invention, ont, malgré la présence de borax en grande quantité, des temps de prise beaucoup plus courts que les compositions conventionnelles 3,4 et 5.

EXEMPLE 2

Durée de vie de gels

Sur les 5 compositions de l'exemple 1, on a déterminé la durée de vie du gel à 90°C de la façon suivante. Le gel est préparé dans une cellule en acier de 57 mm de diamètre intérieur et de 195 mm de long, contenant une tige filetée de 180 mm de long, 7 mm de diamètre, pesant 55 g, placée verticalement au sein du gel en cours de prise. On verse le gel fluide dans cette cellule, en laissant 20 mm de vide au sommet. Un chapeau métallique ferme la cellule. Après prise du gel, on applique 14 bars de pression d'azote sur ce gel et la cellule est placée verticalement dans une étuve à la température de l'essai. Le changement d'état du gel est signalé lorsque, au retournement de la cellule, la tige filetée, prise dans le gel, retombe et vient cogner le fond de la cellule indiquant ainsi que le gel a perdu sa rigidité.
Le tableau 2 rassemble les résultats des tests de stabilité des compositions essayées.

TABLEAU 2.  Durée de vie de gels temporaires de différentes compositions à 90°C.

| Composition | 1 | 2 | 3 | 4 | 5 |
|---|---|---|---|---|---|
| Durée de vie en jours | >30 | >30 | 10 | 7 | 8 |

On constate que les gels des compositions 1 et 2 utilisées conformément à l'invention ont des durées de vie beaucoup plus longues que ceux des compositions de la technique antérieure 3, 4 et 5.

EXEMPLE 3

Essais en puits

Un essai sur puits (température de fond 57°C) a été réalisé en vue de comparer la facilité de mise en oeuvre et la résistance mécanique d'un gel temporaire préparé selon une technique classique à celui de l'invention.
(1) La composition préparée selon la technique classique est la suivante : en vue de préparer environ 1 $m^3$ de gel on ajoute successivement à 960 litres d'eau 10 kg de bicarbonate de sodium, 7 kg de borax, 70 kg d'hydroxy-propylguar de degré de substitution 0,3 et 500 g d'agent de rupture du gel (enzyme).
Les conditions de mise en place de ce gel dans le puits ont été déterminées au préalable au laboratoire : montée en température en 15 minutes de 22 à 48°C, puis plus lente en 80 minutes de 48 à 57°C. Le temps de prise à la température de fond (57°C) a été trouvé égal à 25 minutes.
Le gel, une fois formé au fond du puits, a été soumis à une surpression de 50 bars pendant des périodes de 1 à 3 heures avec un débit de fuite de l'ordre de 30 l/heure. 44 heures après sa mise en place, la pression a chuté de 50 à 23 bars, en 3 heures avec un débit de 25 l/h. Ces débits correspondent à une baisse de niveau liquide, dans le tubage, de l'ordre de 1 à 1,5 m/h. Sous l'influence de l'agent de rupture le gel se casse après une durée de 3 à 4 jours et les résidus sont évacués vers la surface par simple circulation d'eau.

(2) La composition correspondant à l'invention contenait par 500 litres de propylène glycol, 130 kg d'hydroxypropylguar de degré de substitution 0,3 sous forme de poudre et 10 kg d'hydroxypropylguar de degré de substitution 0,6 comme épaississant de ce fluide. On ajoute en tête de puits 14 kg de borax et 1 kg d'agent de rupture (enzyme). Ce mélange a été pompé par le tube de production et s'est hydraté au fond du puits, en regard de la formation à isoler, au contact de l'eau pompée au même moment par l'espace annulaire. Le gel, dont le temps de prise a été préalablement déterminé au laboratoire et trouvé de l'ordre de quelques minutes à la température du puits, contient finalement par m³ d'eau 70 kg de gomme guar, 7 kg de borax et 500 g d'agent de rupture (enzyme).

Le gel, une fois formé, supporte une surpression de l'ordre de 63 bars qui décroît vers 25 bars en 7 heures avec un débit de fuite de 6 l/heure. Ce débit correspond à une baisse de niveau liquide dans le tubage de l'ordre de 0.3 m/h. Sous l'influence de l'agent de rupture le gel se casse après 3 jours ; des mesures d'injectivité dans la formation montrent qu'il n'y a aucun endommagement résiduel dû au gel.

EXEMPLE 4

Un second essai en puits, dans des conditions beaucoup plus sévères, notamment avec température de 130°C au fond, a été réalisé à l'aide d'un gel préparé selon l'invention. Des essais préalables avaient été effectués auparavant sur des puits du même type avec des compositions conventionnelles et avaient souligné la difficulté de mise en place du gel et sa mauvaise résistance mécanique. On a préparé 2500 litres d'une suspension composée de 79 parties de propylène glycol, 10 parties d'hydroxypropylguar de degré de substitution 0,3 et 4 parties d'hydroxypropylguar de degré de substitution 0,6 comme agent épaississant du propylène glycol. A cette suspension on a ajouté en tête de puits 1,25 kg de borax. La suspension a été pompée par les tiges de forage au débit de 250 litres/mn et hydratée au contact de 2500 litres d'eau pompée au même moment et au même débit par l'espace annulaire. Un gel représentant 5 m³ en volume et contenant environ 7% en poids de polymère a été ainsi obtenu en regard de la formation située à 3750 m de profondeur.

Après l'arrêt de l'injection, on remonte les tiges de 350 m en alimentant en eau pour compenser le volume de métal sorti, au même niveau, pendant 30 minutes, qui s'avère stable à 2424 mètres. On augmente progressivement la pression sur le gel par pompage d'eau dans l'espace annulaire et l'on continue à contrôler le niveau d'eau par le tube de production. Il s'avère que jusqu'à une surpression de 135 bars, le gel est parfaitement stable et ne se détruit sous l'action de la température qu'au bout de 9 heures, ce qui correspond à sa durée de vie préalablement mesurée au laboratoire.

EXEMPLE 5

Composition utilisant le chlorure de zirconium en tant qu' agent de pontage.

On prépare d'une composition analogue à la composition (1) de l'exemple 1, mais avec du ZrCl$_4$ à la place du borate.

Ainsi, dans une suspension de 140g d'hydroxy-propyl guar (HPG) par litre de propylène glycol on disperse 2g de ZrCl$_4$ par litre. La suspension est diluée avec un volume égal d'eau, de façon à former un gel contenant 70g/l de HPG et 1g/l de chlorure de zirconium.

Le temps de prise est de 3mn 48 et la durée de vie du gel de 23 jours.

Ce gel se compare donc, de façon satisfaisante, aux gels (1) et (2) des exemples 1 et 2 décrits plus haut.

**Revendications**

1. Procédé de mise en place d'un gel d'obturation dans un puits foré dans le sol, qui comprend l'utilisation d'une suspension ou d'une solution de polymère hydrophile, gélifiable, dans un liquide organique au moins partiellement miscible à l'eau, contenant un borate de métal alcalin ou un sel complexe d'un cation métallique polyvalent, en tant qu'agent de pontage, caractérisé en ce que la suspension ou la solution est introduite dans le puits de façon à n'entrer en contact avec l'eau qu'à l'endroit où il s'agit de produire le gel pour l'obturation.

2. Procédé suivant la revendication 1, caractérisé en ce que le borate est un métaborate ou tétraborate anhydre ou hydraté, de sodium ou de potassium.

3. Procédé suivant la revendication 1, caractérisé en ce que la solution ou la suspension est composée de 5 à 40 parties en poids de polysaccharide pour 95 à 60 parties de mono- ou/et poly-alcool, sa teneur en borate étant de 0,01 à 20 %, exprimé en borax par rapport au poids de polysaccharide.

4. Procédé suivant la revendication 3, caractérisé en ce que la teneur en borax est de 0,5 à 5 % du poids de polysaccharide.

5. Procédé suivant la revendication 3, caractérisé en ce que la solution ou la suspension renferme un hydroxyde, carbonate, bicarbonate ou phosphate de métal alcalin'ou alcalino-terreux en une proportion telle que le gel, après mélange de la composition avec l'eau, présente un pH de 7,5 à 13.

6. Procédé suivant une des revendications précédentes, caractérisé en ce que le polysaccharide est la gomme guar ou un dérivé de substitution hydroxypropylé ou carboxyméthylé de cette gomme, de degré de substitution inférieur à 0,5, et que sa solution ou suspension contient du dérivé à degré de substitution supérieur à 0,5, comme agent épaississant.

7. Procédé suivant la revendication 6, caractérisé en ce que la solution ou la suspension contient 1 à 10 parties en poids d'hydroxy-propyl-guar ou de carboxy-méthyl-guar de degré de substitution de 0,5 à 0,7, pour 5 à 40 parties en poids d'hydroxy-propyl-guar ou de carboxy-méthyl-guar de degré de substitution de 0,2 à 0,4.

8. Procédé suivant une des revendications précédentes, caractérisé en ce que la solution ou la suspension contient un agent de rupture de gel, choisi parmi des enzymes, persulfates et peroxydes.

9. Procédé suivant une des revendications précédentes, pour la mise en place d'un gel dans une zone à obturer d'un puits comprenant un tube de production, qui laisse un espace libre interne et un espace libre externe dans le puits, sans communication l'un avec l'autre, excepté au niveau de la zone à isoler, caractérisé en ce que l'on fait parvenir dans cette zone, par l'un des espaces libres, ladite solution ou suspension et, par l'autre espace libre, un fluide aqueux, et on laisse la composition et le fluide aqueux se mélanger, les proportions respectives de solution ou de suspension et de fluide aqueux étant telles qu'elles permettent la formation d'un gel.

10. Procédé selon la revendication 9, caractérisé en ce que la solution ou la suspension est introduite par le tube de production et le fluide aqueux par l'espace annulaire.

11. Procédé selon l'une des revendications 9 et 10, caractérisé en ce que le gel, mis en place dans le puits, est obtenu à partir de deux bouchons successifs de la solution ou suspension, le premier bouchon, à prise rapide, ne contenant que peu ou pas du tout d'agent de pontage et/ou d'agent basique, le deuxième bouchon, à prise plus lente, contenant les quantités souhaitées d'agent de pontage et/ou d'agent basique.

## Patentansprüche

1. Verfahren zum Einbringen eines Abdichtungsgels in ein in den Erdboden gebohrtes Bohrloch, das umfaßt die Verwendung einer Suspension oder einer Lösung eines gelierbaren hydrophilen Polymers in einer mindestens teilweise mit Wasser mischbaren organischen Flüssigkeit, die als Härter (Brückenbildner) ein Alkalimetallborat oder ein Komplexsalz eines polyvalenten Metallkations enthält, dadurch gekennzeichnet, daß die Suspension oder Lösung in der Weise in das Bohrloch eingeführt wird, daß sie nur an der Stelle mit Wasser in Kontakt kommt, an der das Gel zur Abdichtung gebildet werden soll.

2. Verfahren nach Anspruch 1, dadurch gekennzeichnet, daß es sich bei dem Borat um ein wasserfreies oder hydratisiertes Natrium- oder Kaliumtetraborat oder -tetraborat handelt.

3. Verfahren nach Anspruch 1, dadurch gekennzeichnet, daß die Lösung oder Suspension besteht aus 5 bis 40 Gew.-Teilen Polysaccharid auf 95 bis 60 Gew.-Teile Mono- und/oder Polyalkohol wobei ihr Gehalt an Borat 0,01 bis 20 %, ausgedrückt als Borax, bezogen auf das Gewicht des Polysaccharids, beträgt.

4. Verfahren nach Anspruch 3, dadurch gekennzeichnet, daß der Boraxgehalt 0,5 bis 5 %, bezogen auf das Gewicht des Polysaccharids, beträgt.

5. Verfahren nach Anspruch 3, dadurch gekennzeichnet, daß die Lösung oder Suspension ein Alkalimetall- oder Erdalkalimetallhydroxid, -carbonat, -bicarbonat oder -phosphat in einem solchen Mengenanteil enthält, daß das Gel nach dem Mischen der Zusammensetzung mit Wasser einen pH-Wert von 7,5 bis 13 aufweist.

6. Verfahren nach einem der vorhergehenden Ansprüche, dadurch gekennzeichnet, daß es sich bei dem Polysaccharid um Guar-Gummi oder ein Hydroxypropyl- oder Carboxymethyl-Substitutionsderivat dieses Gummis mit einem Substitutionsgrad von weniger als 0,5 handelt und daß seine Lösung oder Suspension das Derivat mit einem Substitutionsgrad von mehr als 0,5 als Verdickungsmittel enthält.

7. Verfahren nach Anspruch 6, dadurch gekennzeichnet, daß die Lösung oder Suspension 1 bis 10 Gew.-Teile Hydroxypropylguar oder Carboxymethylguar mit einem Substitutionsgrad von 0,5 bis 0,7 auf 5 bis 40 Gew.-Teile Hydroxypropylguar oder Carboxymethylguar mit einem Substitutionsgrad von 0,2 bis 0,4 enthält.

8. Verfahren nach einem der vorhergehenden Ansprüche, dadurch gekennzeichnet, daß die Lösung oder Suspension ein Mittel zum Brechen des Gels enthält, das ausgewählt wird unter Enzymen, Persulfaten und Peroxiden.

9. Verfahren nach einem der vorhergehenden Ansprüche zum Einführen eines Gels in eine abzudichtende Zone eines Bohrloches, das ein Produktionsrohr enthält, das in dem Bohrloch innen einen Raum frei läßt und außen einen Raum frei läßt, die nicht miteinander in Verbindung stehen außer in Höhe der zu isolierenden Zone, dadurch gekennzeichnet, daß man durch einen der freien Räume die genannte Lösung oder Suspension und durch den anderen freien Raum eine wäßrige Flüssigkeit in diese Zone gelangen läßt und daß man die Zusammensetzung und die wäßrige Flüssigkeit sich mischen läßt, wobei die jeweiligen Mengenverhältnisse zwischen der Lösung oder Suspension und der wäßrigen Flüssigkeit so sind, daß sie die Bildung eines Gels erlauben.

10. Verfahren nach Anspruch 9, dadurch gekennzeichnet, daß die Lösung oder Suspension durch das Produktionsrohr eingeführt wird und dar die wäßrige Flüssigkeit durch den ringförmigen Raum eingeführt wird.

11. Verfahren nach einem der Ansprüche 9 und 10, dadurch gekennzeichnet, daß das in das Bohrloch eingeführte Gel erhalten wird aus zwei aufeinanderfolgenden Pfropfen aus der Lösung oder Suspension, wobei der erste Pfropfen, der schnell abbindet, nur wenig oder keinen Härter (Brückenbildner) und/oder basisches Agens enthält, und der zweite Pfropfen, der langsamer abbindet, die gewünschten Mengen an Härter (Brückenbildner) und/oder basischem Agens enthält.

## Claims

1. Process for placing a sealing gel in a well drilled in the ground, which includes the use of a suspension or solution of a hydrophilic gel-forming polymer in an organic liquid at least partially miscible with water, containing a borate of an alkaline metal or a complex salt of a polyvalent metal cation as a bridging agent, characterized in that the suspension or solution is introduced into the well in such a way that it only comes into contact with water in the place where the gel is required for sealing purposes.

2. Process according to claim 1 wherein the borate is an anhydrous or hydrated metaborate or tetraborate of sodium or potassium.

3. Process according to claim 1 wherein the solution or suspension is composed of 5 to 40 parts in weight of polysaccharide per 95 to 60 parts of mono- and/or poly-alcohol, its borate content ranging from 0.01 to 20 %, expressed as borax, with respect to polysaccharide weight.

4. Process according to claim 3 wherein borax content ranges from 0.5 to 5 % of polysaccharide weight.

5. Process according to claim 3 wherein the solution or suspension contains a hydroxide, carbonate, bicarbonate or phosphate of an alkaline metal or alkaline-earth metal in a proportion such that the gel, after mixing of the composition with water, has a pH ranging from 7.5 to 13.

6. Process according to one of the previous claims wherein the polysaccharide is guar gum or a derivative of the hydroxypropyl or carboxymethyl substitution of this gum, having a degree of substitution of less than 0.5, and wherein its solution or suspension contains a derivative having a degree of substitution greater than 0.5 as a thickening agent.

7. Process according to claim 6 wherein the solution or suspension contains 1 to 10 parts in weight of hydroxypropyl guar or carboxymethyl guar, having a degree of substitution of 0.5 to 0.7, per 5 to 40 parts in weight of hydroxypropyl guar or carboxymethyl guar having a degree of substitution of 0.2 to 0.4.

8. Process according to one of the previous claims wherein the solution or suspension contains a gel fracture agent, chosen from enzymes, persulfates and peroxides.

9. Process according to one of the previous claims for placing a gel in the well zone to be sealed, comprising a production pipe which leaves a free internal space and a free external space in the well, not connected to each other except at the level of the zone to be isolated, wherein said solution or suspension is brought to this zone through one of the free spaces and an aqueous fluid is brought to the zone through the other free space, and the composition and the aqueous fluid are allowed to mix, the respective proportions of solution or suspension and aqueous fluid being such that they allow the formation of a gel.

10. Process according to claim 9 wherein the solution or suspension is introduced through the production pipe and the aqueous fluid is introduced through the flow annulus.

11. Process according to one of claims 9 and 10 wherein the gel, placed in the well, is obtained from two successive solution or suspension plugs, the first quick-setting plug containing no or very little bridging agent and/or basic agent, the second slower-setting plug containing the desired amounts of bridging agent and/or basic agent.